# FASCICULE DE BREVET EUROPEEN

(11) **EP 2 451 683 B1**
(45) Date de publication et mention de la délivrance du brevet: **04.09.2013**
(21) Numéro de dépôt: 10742192.7
(22) Date de dépôt: 05.07.2010
(51) Int. Cl.: B60T 8/1755, B60T 8/88

(54) **PROCEDE ET DISPOSITIF DE SURVEILLANCE DE BONNE IMMOBILISATION EN SITUATION DE TRANSPORT D'UN VEHICULE EN MODE VEILLE, ET VEHICULE EQUIPE D'UN TEL DISPOSITIF**
VERFAHREN UND VORRICHTUNG ZUR ÜBERWACHUNG DER KORREKTEN IMMOBILISIERUNG EINES FAHRZEUGS IM PARKMODUS FÜR DEN TRANSPORT UND MIT EINER DERARTIGEN VORRICHTUNG AUSGESTATTETES FAHRZEUG
METHOD AND DEVICE FOR MONITORING THAT A VEHICLE IN STANDBY MODE IS CORRECTLY IMMOBILIZED FOR TRANSPORT, AND VEHICLE EQUIPPED WITH SUCH A DEVICE

(30) Priorité: 06.07.2009 FR 0954651
(43) Date de publication de la demande: 16.05.2012
(73) Titulaire: Renault S.A.S., 78288 Guyancourt Cedex (FR)
(72) Inventeur: BRUNOU, Alfred, F-28500 Saint-Gemme-Moronval (FR); NICOLLE, Stéphane, F-78180 Montigny-le-Bretonneux (FR)
(86) Numéro de dépôt international: PCT/FR2010/051407
(87) Numéro de publication internationale: WO 2011/004106

(56) Documents cités:
- WO-A1-2008/003533
- DE-A1- 19 822 014
- DE-A1-102005 015 062
- DE-A1-102005 045 998
- FR-A1- 2 845 335
- FR-A1- 2 906 515

## Description

L'invention concerne un procédé et dispositif de surveillance de bonne immobilisation en situation de transport d'un véhicule en mode veille, et un véhicule équipé d'un tel dispositif.

Lorsqu'un véhicule est immobilisé en mode veille, un système surveille l'activité des capteurs de vitesse de roue afin de s'assurer de la bonne immobilisation du véhicule avant l'endormissement de ce dernier. Lorsque le véhicule est équipé d'un système de contrôle de trajectoire, par exemple de type E.S.C. (contrôle de la stabilité du véhicule) et lorsque des mouvements sont détectés via les capteurs de vitesse de roue, le dit système de contrôle de trajectoire informe le dispositif d'immobilisation en conséquence : induisant soit une immobilisation du véhicule au moyen d'une augmentation des efforts de serrage du dispositif d'immobilisation (frein de parking) soit des alertes/défauts dédiées. Cette surveillance indispensable atteint ses limites lors d'un transport, où le véhicule peut sembler se déplacer par rapport au support de transport sans pour autant se déplacer réellement. En effet, lors du transport, des activités parasites des capteurs de vitesse de roue peuvent être engendrées à tord et ainsi le dispositif d'immobilisation peut être amené à augmenter les efforts de serrage du dispositif d'immobilisation, pouvant ainsi mener à des défauts nécessitant une intervention technique par diagnostic.

Un procédé et un dispositif ayant les caractéristiques des préambules des revendications 1 et 8 respectivement sont connus du document FR 2845 335 A1.

L'objet de l'invention est donc d'éviter des actions d'immobilisation inutiles du dispositif d'immobilisation et/ou des alertes ou défauts intempestifs d'un véhicule suite à une situation de transport.

De plus, il peut arriver que le véhicule soit mal calé sur son support de transport et bouge légèrement sur celui-ci, par exemple de quelques centimètres.

L'invention vise à remédier à cette situation en resserrant le dispositif d'immobilisation de façon suffisante sans aller jusqu'au serrage maximum, puis à la mise en défaut du véhicule.

Il est proposé selon l'invention un procédé de surveillance de bonne immobilisation en situation de transport d'un véhicule en mode veille suite à l'installation de ce dernier sur un support de transport, le véhicule comportant un dispositif de contrôle de trajectoire, des capteurs de vitesse de roue et un capteur de vitesse de lacet de véhicule reliés audit dispositif de contrôle de trajectoire du véhicule, une unité de traitement des informations détectées, de type ordinateur de bord, gérant notamment des modes de fonctionnement du véhicule, tels que véhicule endormi, en veille, prêt à démarrer, en démarrage, moteur démarré et un dispositif d'immobilisation du véhicule, caractérisé en ce qu'il comprend les étapes suivantes :
- détecter un mode de fonctionnement en veille du véhicule à l'arrêt suite à l'installation du véhicule fixé sur un support de transport,
- détecter une vitesse du véhicule nulle, relevée par les capteurs de vitesse de roue du véhicule suite à ladite installation du véhicule sur le support de transport, sur une période de temps prédéfinie,
- détecter une vitesse de lacet non nulle du véhicule relevée par le capteur de vitesse de lacet du véhicule, correspondant au mouvement relatif du véhicule fixé sur son support, sur une période de temps prédéfinie,
- détecter une vitesse du véhicule non nulle sur au moins deux roues du véhicule sur une période de temps déterminée et sur une faible amplitude de déplacement,
- déterminer dans ces conditions un mode de transport et de surveillance de bonne immobilisation en situation de transport du véhicule, enregistré par ladite unité de traitement des informations, dans lequel ledit dispositif de contrôle de trajectoire commande le resserrage du dispositif d'immobilisation du véhicule au moins une fois afin d'immobiliser le véhicule et inhibe le contrôle afin d'éviter de produire des efforts de serrage inutiles du dispositif d'immobilisation du véhicule engendrant par exemple des défauts nécessitant une intervention technique par diagnostic, et
- permettre la sortie du mode de transport et de surveillance de bonne immobilisation du véhicule et du mode veille, correspondant au réveil du véhicule, réalisé par exemple par une ouverture de porte ou le déplacement du véhicule.

Le procédé s'applique à diverses situations de transport du véhicule et par exemple à un transport routier sur camion, à un transport ferroviaire, à un transport sur ferry, à une mise en fourrière etc., et permet dans cette situation de transport de disposer le véhicule dans un mode de surveillance de déplacement du véhicule sur son support de transport et inhibant toute fausse détection de déplacement, évitant ainsi sa mise en défaut.

Naturellement, le mode veille du véhicule subsiste pendant une période de temps déterminée après l'arrêt du véhicule, sur le support de transport. La période de temps peut être de l'ordre de quelques minutes à soixante minutes.

Ladite période de temps prédéfinie de détection de la vitesse nulle du véhicule est de l'ordre de quelques secondes, par exemple de une à trois secondes

Ladite période de temps prédéfinie de la vitesse de lacet non nulle du véhicule est de l'ordre de quelques secondes, par exemple de une à plusieurs secondes. Cette période peut correspondre à une situation de transport en virage du véhicule.

Ladite période de temps déterminée de la vitesse du véhicule non nulle sur au moins deux roues est de l'ordre de quelques secondes, par exemple de une à trois secondes. Cette période peut correspondre à une situation de transport turbulente du véhicule.

Ladite faible amplitude de déplacement des au moins deux roues à vitesse non nulle du véhicule est de l'ordre de 0,5 à 10 centimètres. Cette amplitude peut correspondre au mouvement du véhicule relativement à ses cales de fixation sur le support de transport, frein de parking mal serré.

De plus, ladite commande de resserrage du dispositif d'immobilisation est effectuée selon un nombre limité de fois, au maximum trois à quatre fois.

Le dispositif de surveillance de bonne immobilisation en situation de transport d'un véhicule en mode veille pour la mise en oeuvre du procédé défini précédemment comprend des capteurs de vitesse de roue du véhicule, un capteur de vitesse de lacet du véhicule, un dispositif de contrôle de trajectoire du véhicule, par exemple de type E.S.C.(contrôle de la stabilité du véhicule), une unité de traitement des informations de type ordinateur de bord du véhicule apte à gérer notamment des modes de fonctionnement du véhicule, tels que véhicule endormi, en veille, prêt à démarrer, en démarrage, moteur démarré et est caractérisé en ce qu'il comporte des moyens aptes à détecter le véhicule dans un mode de transport et de surveillance de bonne immobilisation en situation de transport du véhicule enregistré par ladite unité de traitement des informations, dans lequel ledit dispositif de contrôle de trajectoire commande le resserrage du dispositif d'immobilisation du véhicule au moins une fois et selon un nombre limité de fois afin d'immobiliser le véhicule, et inhibe le contrôle afin d'éviter de produire des efforts de serrage inutiles du dispositif d'immobilisation du véhicule et d'engendrer des défauts nécessitant une intervention technique par diagnostic, et pour permettre le réveil du véhicule, par exemple à une ouverture de porte ou à un déplacement de celui-ci etc.

Lesdits moyens aptes à détecter le véhicule en mode de transport tout en maintenant la surveillance de l'immobilisation du véhicule sont avantageusement un élément de logiciel ajouté au logiciel du dispositif de contrôle de trajectoire du véhicule.

L'invention concerne également un véhicule comprenant un dispositif de surveillance de bonne immobilisation en situation de transport d'un véhicule en veille tel que précité.

L'invention est illustrée ci-après à l'aide d'un exemple de réalisation non limitatif de l'invention et en référence aux dessins annexés dans lesquels :
La figure 1 est une vue schématique des composants d'un dispositif de détection d'un véhicule automobile selon l'invention en situation de transport,
La figure 2 est une vue en élévation d'un véhicule automobile selon l'invention en situation de transport sur un plateau d'un véhicule de transport, et
La figure 3 est un graphe des signaux des capteurs de vitesse de roue, de lacet et du déplacement du véhicule en situation de transport pour un véhicule automobile selon l'invention et un véhicule sans l'invention.

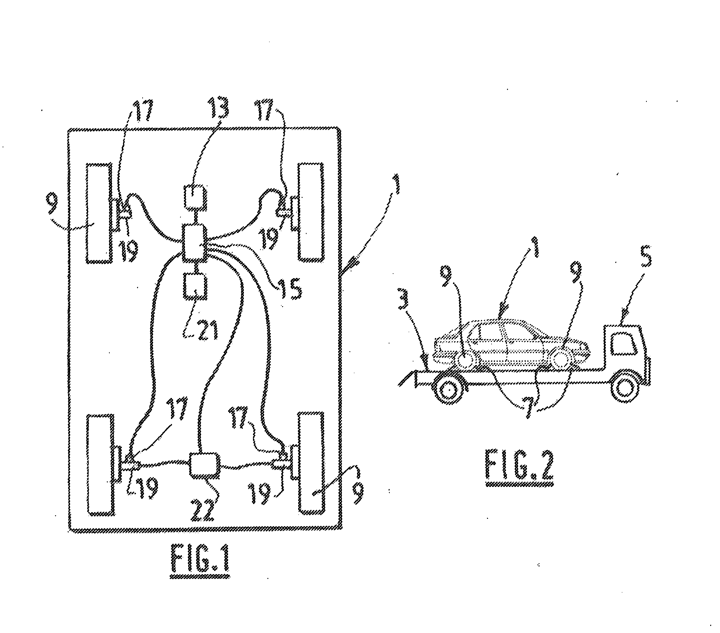

Avec référence aux dessins et en particulier à la figure 2, nous avons représenté un véhicule automobile 1 selon l'invention en situation de transport. Ce véhicule est monté sur un plateau 3 de véhicule de transport 5, un camion, étant fixé à celui-ci au moyen de cales avant et arrière 7 positionnées contre ses roues 9 sur le plateau 3.

Outre le calage du véhicule, ce dernier est mis en situation de frein de parking, par le dispositif d'immobilisation du véhicule 22. Il peut arriver que le véhicule soit mal calé sur son support de transport et bouge légèrement sur celui-ci, par exemple de 0,5 à quelques centimètres aux moments les plus turbulents du transport, notamment si le frein de parking est mal serré.

De plus, au cours du transport, notamment lors des virages, le véhicule automobile 1 est amené à subir un mouvement de lacet, lequel est détecté par le capteur de vitesse de lacet 13 du véhicule (figure 1).

Ce véhicule automobile 1 est pourvu en outre d'un dispositif de contrôle de trajectoire du véhicule 15, de type E.S.C. (contrôle de la stabilité du véhicule). Le véhicule comprend également des capteurs de vitesse de roue 17 montés chacun sur un essieu de roue 19 du véhicule et reliés au dispositif de contrôle de trajectoire 15, lui-même relié à un ordinateur de bord 21 du véhicule ainsi qu'à un dispositif d'immobilisation du véhicule 22. De même le capteur de vitesse de lacet 13, monté à l'intérieur du véhicule, est relié au dispositif de contrôle de trajectoire 15.

Dans cette situation de transport et sans le dispositif de l'invention les capteurs de vitesse de roue 17 vont enregistrer des déplacements du véhicule et le dispositif E.S.C. (contrôle de la stabilité du véhicule) 15 va informer le dispositif d'immobilisation du véhicule 22 amenant ce dernier à produire des efforts de serrage de frein de parking jusqu'au serrage maximum, puis le véhicule semblant continuer à bouger sur son support au cours du transport, engendrera de la part du dispositif d'immobilisation du véhicule 22 des défauts nécessitant une intervention technique par diagnostic.

L'invention apporte une solution à ce problème concernant les véhicules automobiles modernes en situation de transport.

L'invention concerne en effet les véhicules automobiles comportant (figure 1) des capteurs de vitesse de roue 17, un capteur 17 à chaque roue, un capteur de vitesse de lacet 13 du véhicule, un dispositif de contrôle de trajectoire du véhicule 15, de type E.S.C. (contrôle de la stabilité du véhicule), et une unité de traitement des informations 21 de type ordinateur de bord du véhicule. L'ordinateur de bord 21 est relié au dispositif de contrôle de trajectoire 15. Les capteurs de vitesse de roue 17 et le capteur de vitesse de lacet 13 sont reliés au dispositif de contrôle de trajectoire 15. L'ordinateur de bord 21 du véhicule est apte à gérer et à informer du fonctionnement du véhicule et notamment divers modes de fonctionnement de celui-ci, tels que mode de véhicule endormi où le véhicule est à l'arrêt avec ses éléments de contrôle éteints et à un mode d'alimentation électrique de veille, un mode de véhicule en veille où des éléments de contrôle essentiels, tel que la détection d'ouverture de porte, la détection du déplacement du véhicule etc. sont maintenus, un mode du véhicule prêt à démarrer où la carte de démarrage ou la clef de contact du véhicule sont détectés, un mode démarrage du moteur où la carte de démarrage ou la clef de contact sont activés, un mode moteur démarré où les fonctions de conduite et de contrôles correspondantes sont activées.

L'invention consiste à détecter pour un véhicule 1 en mode veille une situation de transport dans laquelle une vitesse du véhicule non nulle sur au moins deux roues du véhicule est détectée sur une période de temps déterminée et sur une faible amplitude de déplacement, ce qui correspond à une mauvaise immobilisation du véhicule sur le support de transport. Elle permet dans un premier temps au dispositif d'immobilisation du véhicule de resserrer le frein de parking notamment jusqu'à l'immobilisation du véhicule mais, en cas de réelle impossibilité d'immobilisation, de continuer la détection de déplacement et ainsi permettre la levée d'alertes appropriées.

La mise en oeuvre de l'invention est illustrée par un exemple de réalisation décrit ci-après.

Supposons qu'un opérateur monte un véhicule automobile moderne 1 équipé d'un ordinateur de bord 21, d'un dispositif E.S.C. (contrôle de la stabilité du véhicule) 15, de capteurs de vitesse de roue 17 et d'un capteur de vitesse de lacet 13 du véhicule sur un plateau 3 de véhicule de transport 5 tel que représenté en figure 2 et le fixe en position, par exemple au moyen de cales 7 sur le plateau support 3 et que le dispositif d'immobilisation du véhicule 22 soit amené à serrer de façon insuffisante le frein de parking du véhicule. Le véhicule 1 est maintenu solidairement au plateau du véhicule de transport avec un léger débattement possible correspondant à la mauvaise fixation de celui-ci sur le plateau support et il peut se déplacer relativement à celui-ci de 0,5 à quelques centimètres.

Le véhicule est en outre maintenu en veille pendant une période de temps variable, de quelques minutes à 60 minutes environ selon les conditions statiques du véhicule au moment de l'arrêt de celui-ci sur le plateau 3. L'opérateur démarre son véhicule de transport 5 et transporte le véhicule 1 dans cette période de veille du véhicule 1 ; le véhicule automobile transporté 1 sera contrôlé par son dispositif E.S.C. (contrôle de la stabilité du véhicule) 15 et notamment pour ses mouvements de déplacement et de lacet par les capteurs de vitesse de roue 17 et de vitesse de lacet 13 respectivement lors du transport.

Si deux capteurs de vitesse de roue 17 ou plus délivrent un signal de vitesse correspondant au très léger déplacement du véhicule automobile sur le plateau 3, aux moments les plus turbulents du transport, par exemple sur une à plusieurs secondes, puis sur des périodes prolongées, par exemple de cinq à quinze minutes, où le transport est plus calme, ils n'en délivrent plus, cette situation sera reconnue par le dispositif E.S.C. (contrôle de la stabilité du véhicule) 15 comme vitesse nulle du véhicule pendant ladite période de turbulence.

De plus, le capteur de vitesse de lacet 13 du véhicule 1 sera appelé à réagir lors du transport, notamment dans les situations de virage pour émettre un signal de vitesse de lacet non nulle du véhicule, ceci sur une faible période de temps correspondant au temps du virage, de quelques secondes, par exemple de une à plusieurs secondes.

Les conditions précitées seront reconnues par le dispositif E.S.C. (contrôle de la stabilité du véhicule) 15 dans la condition de mode veille reçue de l'ordinateur de bord 21 comme une situation de transport et de surveillance de bonne immobilisation du véhicule, dans laquelle ledit dispositif de contrôle de trajectoire 15 informe le dispositif d'immobilisation du véhicule 22 qui commande le resserrage des freins de parking, afin d'immobiliser le véhicule. Le resserrage pourra être effectué de une à plusieurs fois, deux à quatre fois afin d'obtenir l'immobilisation du véhicule puis un filtrage des informations est exécuté par le dispositif E.S.C. (contrôle de la stabilité du véhicule) 15 afin d'éviter au dispositif d'immobilisation du véhicule 22 de produire des efforts de serrage de frein de parking inutiles et d'engendrer ensuite des défauts du véhicule automobile 1.

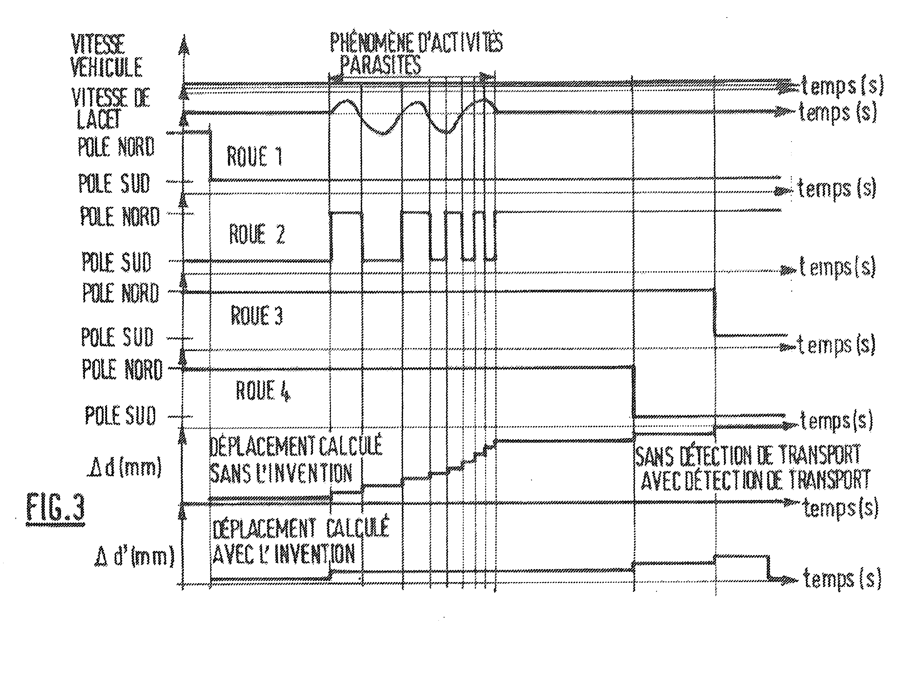

Cette situation est illustrée par la figure 3 où une comparaison graphique est relevée entre un véhicule 1 selon l'invention et un véhicule non équipé de l'invention en cours de transport.

Sur ce graphique sont exprimés en fonction du temps (selon l'abscisse) respectivement depuis le haut vers le bas, les signaux de vitesse du véhicule, de vitesse de lacet du véhicule, de vitesses des capteurs de vitesse de roues 17, le déplacement Δd du véhicule 1 (en mm) calculé sans le dispositif de l'invention et le déplacement Δd' (en mm) calculé du véhicule avec le dispositif de l'invention.

Le graphique montre un transport de véhicule où on observe depuis une vitesse nulle du véhicule sur une période prolongée, par exemple dix minutes de transport, un phénomène d'activités sur une faible période de temps, de l'ordre de quelques secondes, et il y est montré depuis le haut du graphique vers le bas une vitesse non nulle du véhicule, une vitesse de lacet non nulle du véhicule, l'émission de signaux de vitesses des roues 1 à 4 des capteurs de vitesse 17 sur ladite période, le déplacement Δd calculé correspondant d'un véhicule sans le procédé selon l'invention sur ladite période, et le déplacement Δd' calculé ramené à zéro sur ladite période d'un véhicule mettant en oeuvre un procédé selon l'invention.

Naturellement, pour le véhicule non équipé de l'invention le déplacement calculé en escalier est traduit, à tort, comme un déplacement réel du véhicule, ce qui conduira à un resserrage des freins de parking puis à une mise en défaut du véhicule commandé par le dispositif d'immobilisation 22.

Dans le véhicule utilisant le procédé selon l'invention, le déplacement Δd' calculé intègre le mouvement de la roue 1, de la roue 2 (une seule fois), de la roue 3 et de la roue 4, et ne fait pas intervenir les mouvements parasites, détectés par les capteurs 17 de la roue 2 en oscillation.

Naturellement, à la fin de la situation de transport du véhicule, à l'ouverture d'une porte de celui-ci ou au réel déplacement de celui ci, le véhicule sort du mode de transport et surveillance de l'immobilisation.

L'invention apporte ainsi un procédé et un dispositif simples de détection d'un véhicule en situation de transport, permettant d'empêcher une mise en défaut de celui-ci au cours de cette situation.

## Revendications

1. Procédé de surveillance de bonne immobilisation en situation de transport d'un véhicule (1) en mode veille suite à l'installation de ce dernier sur un support de transport (3), le véhicule comportant un dispositif de contrôle de trajectoire (15), des capteurs de vitesse de roue (17) et un capteur de vitesse de lacet de véhicule (13) reliés audit dispositif de contrôle de trajectoire (15) du véhicule, une unité de traitement des informations détectées (21), de type ordinateur de bord, gérant notamment des modes de fonctionnement du véhicule, tels que véhicule endormi, en veille, prêt à démarrer, en démarrage, moteur démarré et d'un dispositif d'immobilisation du véhicule (22), **caractérisé en ce qu'**il comprend les étapes suivantes :
- détecter un mode de fonctionnement en veille du véhicule (1) à l'arrêt suite à l'installation du véhicule (1) fixé sur un support de transport (3),
- détecter une vitesse du véhicule (1) nulle, relevée par les capteurs de vitesse de roue (17) du véhicule suite à ladite installation du véhicule (1) sur le support de transport (3), sur une période de temps prédéfinie,
- détecter une vitesse de lacet non nulle du véhicule (1) relevée par le capteur de vitesse de lacet (13) du véhicule, correspondant au mouvement relatif du véhicule (1) fixé sur son support (3), sur une période de temps prédéfinie,
- détecter une vitesse du véhicule (1) non nulle sur au moins deux roues (9) du véhicule sur une période de temps déterminée et sur une faible amplitude de déplacement,
- déterminer dans ces conditions un mode de transport et de surveillance de bonne immobilisation en situation de transport du véhicule (1), enregistré par ladite unité de traitement des informations (21), dans lequel ledit dispositif de contrôle de trajectoire (15) commande le resserrage du dispositif d'immobilisation du véhicule au moins une fois afin d'immobiliser le véhicule (1) et inhibe le contrôle afin d'éviter de produire des efforts de serrage inutiles du dispositif d'immobilisation du véhicule engendrant par exemple des défauts nécessitant une intervention technique par diagnostic, et
- permettre la sortie du mode de transport et de surveillance de bonne immobilisation du véhicule (1) et du mode veille, correspondant au réveil du véhicule (1).

2. Procédé de surveillance selon la revendication 1, **caractérisé en ce que** le mode veille du véhicule (1) subsiste pendant une période de temps déterminée après l'arrêt du véhicule (1), sur le support de transport (3).

3. Procédé de surveillance selon l'une des revendications 1 et 2, **caractérisé en ce que** ladite période de temps prédéfinie de détection de la vitesse nulle du véhicule (1) est de l'ordre de quelques secondes.

4. Procédé de surveillance selon l'une quelconque des revendications précédentes, **caractérisé en ce que** ladite période de temps prédéfinie de la vitesse de lacet non nulle du véhicule (1) est de l'ordre de quelques secondes.

5. Procédé de surveillance selon l'une quelconque des revendications précédentes, **caractérisé en ce que** ladite période de temps déterminée de la vitesse du véhicule non nulle sur au moins deux roues (9) est de l'ordre de quelques secondes.

6. Procédé de surveillance selon l'une quelconque des revendications précédentes, **caractérisé en ce que** ladite faible amplitude de déplacement des au moins deux roues (9) à vitesse non nulle du véhicule est de l'ordre de 0,5 à 10 centimètres.

7. Procédé de surveillance selon l'une quelconque des revendications précédentes, **caractérisé en ce que** ladite commande de resserrage du dispositif d'immobilisation est effectuée selon un nombre limité de fois.

8. Dispositif de surveillance de bonne immobilisation en situation de transport d'un véhicule (1) en mode veille pour la mise en oeuvre du procédé défini selon l'une quelconque des revendications précédentes comprenant des capteurs de vitesse de roue (17) du véhicule, un capteur de vitesse de lacet (13) du véhicule, un dispositif de contrôle de trajectoire (15) du véhicule, par exemple de type E.S.C. ( contrôle de la stabilité du véhicule), une unité de traitement des informations (21) de type ordinateur de bord du véhicule apte à gérer notamment des modes de fonctionnement du véhicule (1), tels que véhicule endormi, en veille, prêt à démarrer, en démarrage, moteur démarré, dispositif **caractérisé en ce qu'**il comporte des moyens aptes à détecter le véhicule (1) dans un mode de transport et de surveillance de bonne immobilisation en situation de transport du véhicule enregistré par ladite unité de traitement des informations (21), dans lequel ledit dispositif de contrôle de trajectoire (15) commande le resserrage du dispositif d'immobilisation du véhicule au moins une fois et selon un nombre limité de fois afin d'immobiliser le véhicule et est adapté pour inhiber le contrôle afin d'éviter de produire des efforts de serrage de frein inutiles du véhicule et d'engendrer des défauts nécessitant une intervention technique par diagnostic, et à permettre le réveil du véhicule (1), par exemple à une ouverture de porte ou à un déplacement de celui-ci.

9. Dispositif de surveillance selon la revendication 8, **caractérisé en ce que** lesdits moyens aptes à détecter le véhicule (1) en mode de transport tout en maintenant la surveillance de l'immobilisation du véhicule sont un élément de logiciel ajouté au logiciel du dispositif de contrôle de trajectoire (15) du véhicule.

10. Véhicule (1) **caractérisé en ce qu'**il comprend un dispositif de surveillance de bonne immobilisation en situation de transport du véhicule (1) en mode veille selon l'une des revendications 8 ou 9.

## Patentansprüche

1. Verfahren zur Überwachung der korrekten Immobilisierung eines Fahrzeugs (1) in einer Transportsituation im Parkmodus im Anschluss an die Installation dieses Letzteren auf einem Transportträger (3), wobei das Fahrzeug eine Bahnsteuervorrichtung (15), Raddrehzahlsensoren (17) und einen Fahrzeug-Kurvengeschwindigkeitssensor (13), die mit der Bahnsteuervorrichtung (15) des Fahrzeugs verbunden sind, eine Verarbeitungseinheit der erfassten Informationen (21) des Typs Bordrechner, der insbesondere Betriebsmodi des Fahrzeugs, wie zum Beispiel eingeschlafenes Fahrzeug, Fahrzeug im Stand-by, startklares Fahrzeug, beim Starten, Motor angelassen, verwaltet, und eine Immobilisierungsvorrichtung des Fahrzeugs (22) aufweist, **dadurch gekennzeichnet, dass** es die folgenden Schritte aufweist:
- Erfassen eines Parkbetriebsmodus des Fahrzeugs (1) beim Stoppen im Anschluss an die Installation des Fahrzeugs (1), auf einem Transportträger (3) befestigt,
- Erfassen einer Geschwindigkeit gleich null des Fahrzeugs (1), gemessen von den Raddrehzahlsensoren (17) des Fahrzeug im Anschluss an die Installation des Fahrzeugs (1) auf dem Transportträger (3) während einer vordefinierten Zeitspanne,
- Erfassen einer Kurvengeschwindigkeit nicht gleich null des Fahrzeugs (1), die von dem Kurvengeschwindigkeitssensor (13) des Fahrzeugs gemessen wird, die der relativen Bewegung des Fahrzeugs (1), das auf seinem Träger (3) befestigt ist, während einer vorbestimmten Zeitspanne entspricht,
- Erfassen einer Geschwindigkeit nicht gleich null des Fahrzeugs (1) auf mindestens zwei Rädern (9) des Fahrzeugs während einer bestimmten Zeitspanne und auf einer geringen Bewegungsamplitude,
- unter diesen Betriebsbedingungen Bestimmen eines Transport- und Überwachungsmodus der korrekten Immobilisierung in einer Transportsituation des Fahrzeugs (1), registriert von der Verarbeitungseinheit der Informationen (21), in dem die Bahnsteuervorrichtung (15) das Nachziehen der Immobilisierungsvorrichtung des Fahrzeugs mindestens einmal befiehlt, um das Fahrzeug (1) stillzustellen, und die Steuerung inhibiert, um zu vermeiden, unnötige Spannkräfte der Immobilisierungsvorrichtung des Fahrzeugs zu erzeugen, die zum Beispiel Fehler hervorrufen, die einen technischen Eingriff durch Diagnose erfordern, und
- Gestatten des Verlassens des Transport- und Überwachungsmodus der korrekten Immobilisierung des Fahrzeugs (1) und des Parkmodus, das dem Aufwachen des Fahrzeugs (1) entspricht.

2. Überwachungsverfahren nach Anspruch 1, **dadurch gekennzeichnet, dass** der Parkmodus des Fahrzeugs (1) während einer bestimmten Zeitspanne nach dem Stoppen des Fahrzeugs (1) auf dem Transportträger (3) fortdauert.

3. Überwachungsverfahren nach einem der Ansprüche 1 und 2, **dadurch gekennzeichnet, dass** die vorbestimmte Erfassungszeitspanne der Geschwindigkeit gleich null des Fahrzeugs (1) in der Größenordnung von einigen Sekunden liegt.

4. Überwachungsverfahren nach einem der vorhergehenden Ansprüche, **dadurch gekennzeichnet, dass** die vordefinierte Zeitspanne der Kurvengeschwindigkeit nicht gleich null des Fahrzeugs (1) in der Größenordnung von einigen Sekunden liegt.

5. Überwachungsverfahren nach einem der vorhergehenden Ansprüche, **dadurch gekennzeichnet, dass** die bestimmte Zeitspanne der Geschwindigkeit nicht gleich null des Fahrzeugs auf mindestens zwei Rädern (9) in der Größenordnung von einigen Sekunden liegt.

6. Überwachungsverfahren nach einem der vorhergehenden Ansprüche, **dadurch gekennzeichnet, dass** die geringe Bewegungsamplitude der mindestens zwei Räder (9) bei Geschwindigkeit nicht gleich null des Fahrzeugs in der Größenordnung von 0,5 bis 10 cm liegt.

7. Überwachungsverfahren nach einem der vorhergehenden Ansprüche, **dadurch gekennzeichnet, dass** der Nachziehbefehl der Immobilisierungsvorrichtung gemäß einer beschränkten Anzahl von Malen ausgeführt wird.

8. Vorrichtung zur Überwachung der korrekten Immobilisierung in einer Transportsituation eines Fahrzeugs (1) im Parkmodus für das Umsetzen des Verfahrens, das nach einem der vorhergehenden Ansprüche definiert ist, das Raddrehzahlsensoren (17) des Fahrzeugs, einen Kurvengeschwindigkeitssensor (13) des Fahrzeugs, eine Bahnsteuervorrichtung (15) des Fahrzeugs, zum Beispiel des Typs E.S.C. (Stabilitätssteuerung des Fahrzeugs), eine Verarbeitungseinheit der Informationen (21) des Typs Bordcomputer des Fahrzeugs, die angepasst ist, um insbesondere Betriebsmodi des Fahrzeugs (1) zu verwalten, wie zum Beispiel eingeschlafenes Fahrzeug, Fahrzeug im Stand-by, startklares Fahrzeug, beim Starten, Motor angelassen, aufweist, wobei die Vorrichtung **dadurch gekennzeichnet ist, dass** sie Mittel aufweist, die geeignet sind, um das Fahrzeug (1) in einem Transport- und Überwachungsmodus der korrekten Immobilisierung in Transportsituation des Fahrzeugs, registriert von der Verarbeitungseinheit der Informationen (21), zu erfassen, bei dem die Bahnsteuervorrichtung (15) das Nachziehen der Immobilisierungsvorrichtung des Fahrzeugs mindestens einmal befiehlt und gemäß einer beschränkten Anzahl von Malen, um das Fahrzeug zu immobilisieren, und angepasst ist, um die Steuerung zu verhindern, um zu vermeiden, dass unnütze Bremsspannkräfte des Fahrzeugs erzeugt und Fehler verursacht werden, die einen technischen Eingriff durch Diagnose erfordern, und das Aufwachen des Fahrzeugs (1) zum Beispiel bei einem Türöffnen oder bei einem Fahren von diesem zu erlauben.

9. Überwachungsvorrichtung nach Anspruch 8, **dadurch gekennzeichnet, dass** die Mittel, die geeignet sind, um das Fahrzeug (1) im Transportmodus zu erfassen und gleichzeitig die Überwachung der Immobilisierung des Fahrzeugs aufrechtzuerhalten, ein Softwareelement sind, das zu der Software der Bahnsteuervorrichtung (15) des Fahrzeugs hinzugefügt ist.

10. Fahrzeug (1), **dadurch gekennzeichnet, dass** es eine Überwachungsvorrichtung der korrekten Immobilisierung in einer Transportsituation des Fahrzeugs (1) im Parkmodus nach einem der Ansprüche 8 oder 9 aufweist.

## Claims

1. Method for monitoring that a vehicle (1) in standby mode is correctly immobilized for transport following the installation of the latter on a transport carrier (3), the vehicle including a course control device (15), wheel speed sensors (17) and a vehicle yaw speed sensor (13) linked to said course control device (15) of the vehicle, a detected information processing unit (21), of on-board computer type, managing in particular modes of operation of the vehicle, such as vehicle switched off, on standby, ready to start, starting, engine started, and a vehicle immobilizing device (22), **characterized in that** it comprises the following steps:
- detecting a standby mode of operation of the vehicle (1) when stopped following the installation of the vehicle (1) fixed on a transport carrier (3),
- detecting a zero speed of the vehicle (1), recorded by the wheel speed sensors (17) of the vehicle following said installation of the vehicle (1) on the transport carrier (3), over a predefined time period,
- detecting a non-zero yaw speed of the vehicle (1), recorded by the yaw speed sensor (13) of the vehicle, corresponding to the relative movement of the vehicle (1) fixed on its carrier (3), over a predefined time period,
- detecting a non-zero speed of the vehicle (1) on at least two wheels (9) of the vehicle over a determined time period and over a low displacement amplitude,
- under these conditions, determining a mode for transport and for monitoring the correct immobilization for transport of the vehicle (1), stored by said information processing unit (21), in which said course control device (15) orders the retightening of the vehicle immobilizing device at least once in order to immobilize the vehicle (1) and disables the control in order to avoid producing unnecessary tightening forces of the vehicle immobilizing device resulting, for example, in defects requiring a diagnostic-based technical intervention, and
- allowing for an exit from the mode for transport and for monitoring the correct immobilization of the vehicle (1) and the standby mode, corresponding to the vehicle (1) being switched on again.

2. Monitoring method according to Claim 1, **characterized in that** the standby mode of the vehicle (1) remains for a determined time period after the vehicle (1) is stopped, on the transport carrier (3).

3. Monitoring method according to one of Claims 1 and 2, **characterized in that** said predefined time period for detecting the zero speed of the vehicle (1) is of the order of a few seconds.

4. Monitoring method according to any one of the preceding claims, **characterized in that** said predefined time period of the non-zero yaw speed of the vehicle (1) is of the order of a few seconds.

5. Monitoring method according to any one of the preceding claims, **characterized in that** said determined time period of the non-zero speed of the vehicle on at least two wheels (9) is of the order of a few seconds.

6. Monitoring method according to any one of the preceding claims, **characterized in that** said low displacement amplitude of the at least two wheels (9) at non-zero speed of the vehicle is of the order of 0.5 to 10 centimeters.

7. Monitoring method according to any one of the preceding claims, **characterized in that** said order to retighten the immobilizing device is carried out a limited number of times.

8. Device for monitoring that a vehicle (1) in standby mode is correctly immobilized for transport for implementing the method defined according to any one of the preceding claims comprising vehicle wheel speed sensors (17), a vehicle yaw speed sensor (13), a vehicle course control device (15), for example of E.S.C. (vehicle stability control) type, an information processing unit (21) of computer type on board the vehicle suitable for managing in particular modes of operation of the vehicle (1), such as vehicle switched off, on standby, ready to start, starting, engine started, a device **characterized in that** it comprises means suitable for detecting the vehicle (1) in a mode for transport and for monitoring that the vehicle is correctly immobilized for transport, stored by said information processing unit (21), in which said course control device (15) orders the retightening of the vehicle immobilizing device at least once and a limited number of times in order to immobilize the vehicle and is adapted to disable the control in order to avoid producing unnecessary vehicle brake tightening forces and causing defects requiring a diagnostic-based technical intervention, and for enabling the vehicle (1) to be switched on again, for example when a door is opened or when said vehicle is moved.

9. Monitoring device according to Claim 8, **characterized in that** said means suitable for detecting the vehicle (1) in transport mode while maintaining the monitoring of the immobilization of the vehicle are a software element added to the software of the course control device (15) of the vehicle.

10. Vehicle (1), **characterized in that** it comprises a device for monitoring that the vehicle (1) in standby mode is correctly immobilized for transport according to one of Claims 8 or 9.
